# FASCICULE DE BREVET EUROPEEN

(11) **EP 2 104 092 B1**
(45) Date de publication et mention de la délivrance du brevet: **13.04.2016**
(21) Numéro de dépôt: 09153621.9
(22) Date de dépôt: 25.02.2009
(51) Int. Cl.: G09G 3/36

(54) **Dispositif d'affichage pouvant fonctionner en mode partiel d'affichage basse consommation**
Anzeigevorrichtung, die in einem Sondermodus zur Anzeige mit geringem Energieverbrauch betrieben werden kann
Display device capable of operating in partial low-power display mode

(30) Priorité: 17.03.2008 EP 08152848
(43) Date de publication de la demande: 23.09.2009
(73) Titulaire: The Swatch Group Research and Development Ltd., 2074 Marin (CH)
(72) Inventeur: Monthéard, Anne, 1424 Champagne (CH); Grupp, Joachim, 2073 Enges (CH); Martin, Jean-Claude, 2037 Montmollin (CH)
(74) Mandataire: Surmely, Gérard

(56) Documents cités:
- EP-A- 0 106 386
- EP-A- 0 229 647
- EP-A- 0 617 397
- EP-A- 0 811 866
- EP-A- 1 213 700
- "Some new addressing techniques for rms responding matrix lcds" février 1988 (1988-02), THESIS SUBMITTED FOR THE DEGREE OF DOCTOR OF PHILOSOPHY IN THEFACULTY OF ENGINEERING INDIAN INSTITUTE OF SCIENCE BANGALORE, XX, XX, PAGE(S) 1-62 , XP002495860 Extrait de l'Internet: URL:http://dspace.rri.res.in/dspace/handle /2289/3499> * page 3.1 - page 3.18 *

## Description

L'invention concerne un dispositif d'affichage par exemple du type LCD susceptible de fonctionner dans un mode partiel d'affichage à basse consommation. Le dispositif d'affichage comprend une cellule d'affichage, qui comprend un substrat inférieur, un substrat supérieur transparent, un cadre de scellement des substrats définissant une cavité fermée dans laquelle se trouve une substance dont les propriétés optiques changent en présence d'un champ électrique, et une matrice d'électrodes disposées en lignes et en colonnes. Les lignes peuvent être placées sur une première face intérieure d'un des substrats, alors que les colonnes peuvent être placées sur une seconde face intérieure de l'autre substrat pour définir des pixels du dispositif entre les lignes et les colonnes. Le dispositif comprend également un circuit de commande des lignes et des colonnes pour l'affichage d'une information sur la cellule d'affichage. Dans un mode complet d'affichage toutes les lignes et les colonnes sont adressées à plusieurs niveaux de tension en multiplexant les lignes successivement ligne par ligne.

Dans un dispositif d'affichage du type LCD à matrice passive, les lignes et les colonnes de la cellule d'affichage sont commandées par un circuit de commande ou d'entraînement traditionnel. Le nombre de lignes est en général inférieur au nombre de colonnes. Les pixels de chaque colonne sont adressés les uns après les autres par multiplexage ligne par ligne. Le pixel est éteint entre deux opérations de rafraîchissement. Normalement quand la matrice d'affichage est de grande dimension, il est normalement utilisé un dispositif d'affichage du type LCD à matrice active.

Pour un dispositif d'affichage à cellule d'affichage de grande dimension, il peut être imaginé de configurer le dispositif d'affichage pour n'utiliser qu'une partie active de la cellule dans un mode partiel d'affichage afin de réduire la consommation électrique du dispositif dans ce mode partiel. On peut citer à ce titre la demande de brevet EP 0 811 866, qui décrit un procédé d'entraînement d'un dispositif d'affichage dans le but de réduire sa consommation électrique. Pour ce faire, il est prévu de placer une partie des lignes et colonnes inactives de la matrice à une tension définie. Des lignes et colonnes de la partie active sont par contre adressées successivement de manière traditionnelle notamment par multiplexage pour l'affichage d'une information.

Un inconvénient d'une telle solution décrite dans la demande de brevet EP 0 811 866 est que dans un mode complet d'affichage ou dans un mode partiel d'affichage, il doit être utilisé plusieurs niveaux de tension pour l'affichage d'une information. Ces différents niveaux de tension doivent être obtenus par au moins un circuit élévateur de tension. Ceci ne permet donc pas de réduire suffisamment la consommation électrique même dans un mode partiel d'affichage, car un multiplexage ligne par ligne à différents niveaux de tension doit être opéré.

Au lieu d'opérer un multiplexage sur les lignes, une méthode d'adressage a été décrite dans l'article intitulé "Active Addressing Method for High-Contrast Video-Rate STN Displays", dans SID 1992, par Mrs T. J. Scheffer et B. Clifton. La méthode décrite a pour but de résoudre des problèmes liés aux dispositifs d'affichage LCD, qui sont toujours plus rapides. Le principe est d'appliquer des fonctions orthonormées sur les lignes et de calculer les valeurs sur les colonnes en fonction des valeurs à afficher par les pixels et les valeurs sur les lignes. Cependant cet article ne décrit pas le moyen de réaliser un dispositif d'affichage susceptible de fonctionner à basse consommation comme pour la présente invention.

Dans la demande de brevet EP 0 617 397, il est décrit un dispositif d'affichage à cristaux liquides de grande dimension. Plusieurs lignes de ce dispositif d'affichage sont individuellement et simultanément entraînées par plusieurs circuits d'entraînement de lignes avec des tensions déterminées selon les fonctions de Walsh. Cependant rien n'est spécifié concernant une réduction de consommation lors du passage d'un mode d'affichage complet à un mode d'affichage partiel, dans lequel une technique d'adressage actif peut être utilisée.

L'invention a donc pour but de pallier aux inconvénients de l'état de la technique en fournissant un dispositif d'affichage pouvant fonctionner dans un mode partiel d'affichage avec un adressage de lignes et colonnes à basse tension afin de réduire la consommation dudit dispositif dans ce mode partiel.

A cet effet, l'invention concerne un dispositif d'affichage cité cidevant qui comprend les caractéristiques définies dans la revendication indépendante 1.

Des formes particulières de réalisation du dispositif d'affichage sont définies dans les revendications dépendantes 2 à 10.

Un avantage du dispositif d'affichage selon l'invention réside dans le fait que dans le mode partiel d'affichage, il est utilisé un adressage actif de toutes les lignes, qui sont de ce fait toutes actives et non multiplexées l'une après l'autre. Les signaux de commande des lignes, ainsi que les signaux de commande des colonnes obtenus sur la base des signaux de commande de lignes, ne comprennent que deux niveaux de tensions. Un premier niveau de tension correspondant par exemple à une tension nulle est défini par un état logique 0. Un second niveau de tension correspondant à une tension, qui est moins de deux fois supérieure à la tension de seuil du dispositif d'affichage, est défini par un état logique 1. Un circuit élévateur de tension n'est donc plus forcément nécessaire pour un adressage actif des lignes. Ceci permet donc de réduire fortement la consommation électrique du dispositif d'affichage dans le mode partiel, qui peut ainsi équiper un objet portable, tel qu'une montre-bracelet électronique alimentée par une batterie de petite taille.

Avantageusement grâce à l'adressage actif des lignes de la cellule d'affichage, dont certaines sont court-circuitées pour former au moins un groupe de lignes en mode partiel, la composante continue de tension est supprimée intrinsèquement. Les signaux de commande sont également simples à générer. Ceci est différent d'un adressage par multiplexage traditionnel où la succession de cycles d'adressage de lignes doit être alternée un cycle sur deux par des cycles d'impulsions identiques mais de polarité inverse pour supprimer la composante continue de tension. Cependant le dispositif d'affichage possède la capacité de pouvoir être commuté pour fonctionner soit en mode complet d'affichage, soit en mode partiel.

Dans le mode partiel d'affichage pour définir une zone active d'affichage d'au moins une ligne de caractères, certaines colonnes peuvent également être court-circuitées pour former au moins un groupe de colonnes. Avec les groupes de lignes et de colonnes ainsi formés, cela permet de réduire la fréquence de travail dans ce mode partiel d'affichage.

Avantageusement l'adressage actif du dispositif d'affichage dans le mode partiel basse consommation peut se baser sur la méthode d'adressage décrite notamment dans l'article intitulé "Some new addressing techniques for RMS responding matrix " tiré d'une thèse de M. T. N. Ruckmongathan, du Dept. Electrical Comm. Eng. Indian Institute of Science, Bangalore, Karnataka en 1988. Pour cela, le nombre N de lignes à adresser activement, dont une ligne adressée comprend au moins un groupe de lignes court-circuitées, doit être réduit de manière à avoir encore un contraste suffisant du dispositif d'affichage. Ce nombre N, qui doit être un nombre impair, peut être compris entre 3 et 11.

La méthode de l'article ci-dessus est donc dérivée de l'adressage actif. Pour ce faire, un mot de N bits est choisi pour les N lignes, qui comprend le groupe de lignes reliées ou regroupées, avec les deux niveaux de tension susmentionnés. Le mot de N bits change à chaque période de temps T définie par des impulsions d'horloge afin de constituer des fonctions ortho-normales dans un cycle complet. Dans chaque cycle d'adressage actif successif, toutes les combinaisons de mots binaires à N bits doivent donc être choisies. Il est nécessaire d'avoir 2^{N} combinaisons, pour chaque cycle de durée 2^{N}·T.

Avantageusement pour déterminer les signaux de commande des colonnes, la succession de mots binaires dans l'adressage simultané des N lignes est utilisée. Pour ce faire, un mot binaire de données dans chaque colonne est comparé bit à bit avec chaque mot binaire successif d'adressage de lignes. Cette comparaison est opérée au moyen de comparateurs numériques, par exemple par des portes OU-EXCLUSIF (XOR). Le nombre de différences pour chaque mot binaire d'adressage de lignes est compté et comparé à un seuil. Le niveau de tension appliqué à la colonne correspond au premier niveau de tension, c'est-à-dire l'état logique 0 si le nombre résultant de toutes les comparaisons est inférieur à N/2. Le niveau de tension pour la colonne correspond par contre au second niveau de tension, c'est-à-dire l'état logique 1 si le nombre résultant des comparaisons est supérieur à N/2. Les signaux de commande de colonnes sont ainsi définis pour chaque cycle successif pour les 2^{N} combinaisons de mots binaires de lignes.

Les buts, avantages et caractéristiques du dispositif d'affichage apparaîtront mieux dans la description suivante sur la base d'au moins une forme d'exécution non limitative illustrée par les dessins sur lesquels :
la figure 1 représente une vue simplifiée de dessus de la cellule d'affichage du dispositif d'affichage selon l'invention montrant la zone active et les lignes et colonnes court-circuitées,
la figure 2 représente de manière simplifiée un schéma bloc des éléments électroniques du dispositif d'affichage selon l'invention,
la figure 3 représente une forme de réalisation du générateur de signaux de commande de lignes pour un adressage actif du dispositif d'affichage selon l'invention,
la figure 4 représente de manière simplifiée des graphiques de signaux de commande de lignes et de colonnes obtenus, et un signal de tension de polarisation résultant d'un pixel dans chaque cycle d'adressage actif en mode partiel du dispositif d'affichage selon l'invention,
la figure 5 représente de manière simplifiée des graphiques de signaux de commande d'une ligne et d'une colonne, et un signal de tension de polarisation résultant d'un pixel choisi dans un mode complet d'affichage traditionnel du dispositif d'affichage selon l'invention, et
la figure 6 représente un ensemble diviseur résistif pour la fourniture des différents niveaux de tension dans un mode complet d'affichage du dispositif d'affichage selon l'invention.

Dans la description suivante, tous les éléments du dispositif d'affichage qui sont bien connus de l'homme du métier dans ce domaine technique ne seront relatés que de manière simplifiée. Il est fait référence principalement à un dispositif d'affichage à cristaux liquides pour une utilisation dans une montre, même si la configuration du dispositif en mode partiel d'affichage peut être appliquée à tout autre type de dispositif d'affichage.

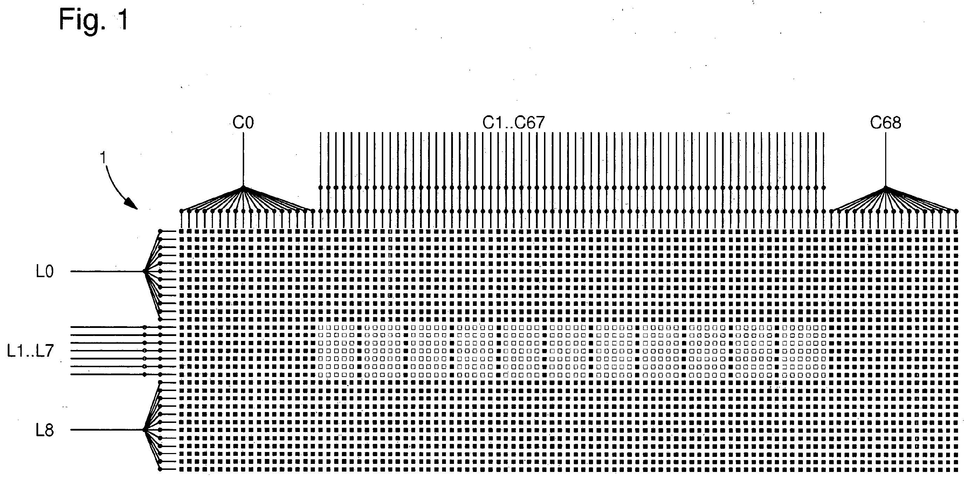

A la figure 1, il est représenté une vue de dessus de la cellule d'affichage 1 du dispositif d'affichage, qui est notamment du type à cristaux liquides. Non représenté à la figure 1, la cellule d'affichage 1 est composée d'un substrat inférieur transparent ou non, un substrat supérieur transparent et un cadre de scellement des substrats pour définir une cavité fermée. Dans la cavité fermée, une substance, dont les propriétés optiques changent en présence d'un champ électrique, est placée.

Dans cette forme d'exécution, la cellule d'affichage 1 comprend également une matrice d'électrodes pour définir des pixels de la cellule d'affichage. Les lignes de la matrice sont disposées sur une face intérieure d'un des substrats, alors que les colonnes de la matrice sont disposées sur une face intérieure de l'autre substrat en regard des lignes et perpendiculaires aux lignes. L'orientation des cristaux de la substance pour un pixel est obtenue par une différence de potentiel supérieure à une tension de seuil de la cellule d'affichage appliquée entre une colonne en regard d'une ligne.

Dans cette forme d'exécution, la cellule d'affichage 1 comprend pour un mode complet d'affichage du dispositif d'affichage, N' lignes, telles que 31 lignes, et M' colonnes, telles que 101 colonnes. Ceci permet de définir N' x M' pixels d'une grande cellule d'affichage. Lorsque le dispositif d'affichage est configuré dans un mode partiel d'affichage, plusieurs lignes sont reliées ou regroupées comme court-circuitées, ainsi que plusieurs colonnes.

Comme montré à la figure 1, il est prévu un premier groupe de lignes court-circuitées L0, un second groupe de lignes court-circuitées L8, un premier groupe de colonnes court-circuitées C0 et un second groupe de colonnes court-circuitées C68. Ces groupes de lignes et colonnes définissent une zone inactive de la cellule d'affichage, alors que les autres lignes L1 à L7 et les autres colonnes C1 à C67 définissent une zone active du dispositif d'affichage. La zone active doit pouvoir afficher au moins une lignes de caractères dans le mode partiel d'affichage.

Il est à noter que dans le mode partiel d'affichage du dispositif d'affichage, il est opéré un adressage actif des lignes et groupes de lignes comme expliqué ci-après avec uniquement deux niveaux de tension. Un premier niveau de tension peut être une tension nulle, ce qui correspond à un état logique 0. Un second niveau de tension Vs peut être une tension de valeur supérieure à la tension de seuil Vth de la cellule d'affichage à cristaux liquides, ce qui correspond à un état logique 1. Toutes les lignes dans ce mode partiel sont adressées simultanément et non multipléxées comme dans un mode complet d'affichage. Les deux groupes de lignes L0 et L8 peuvent être considérées chacun comme une autre ligne L1 à L7 de la zone active pour l'adressage actif, car dans ce mode partiel aussi bien les lignes de la zone active que les deux groupes de lignes sont adressés simultanément par un signal de commande respectif.

La méthode d'adressage convenant bien au dispositif d'affichage en mode partiel basse consommation est celle décrite notamment dans l'article intitulé "Some new addressing techniques for RMS responding matrix " tiré d'une thèse de M. T. N. Ruckmongathan, du Dept. Electrical Comm. Eng. Indian Institute of Science, Bangalore, Karnataka en 1988. Pour de plus amples informations relatives à cette méthode d'adressage actif, le lecteur peut se référer principalement aux pages 3.1 à 3.18 du chapitre 3 de cet article.

Par cette méthode d'adressage actif, le nombre de lignes et de groupes de lignes à adresser doit être réduit dans ce mode partiel. Ce nombre est égal à N, où N est un nombre entier situé par exemple entre 3 et 11, par exemple égal à 9 comme les références L0 à L8 montrées à la figure 1. Selon le principe d'adressage actif décrit, le nombre N doit en principe être choisi impair. Ainsi uniquement des premier et second niveaux de tension sont à générer. De préférence, il est utilisé une tension nulle pour le premier niveau de tension et une tension Vs d'une valeur supérieure à la tension de seuil de la cellule d'affichage pour le second niveau de tension.

Avec un nombre N de lignes et de groupes de lignes égal à 9, la valeur de cette tension pour définir un état logique 1 est 1.659·Vth, où Vth est la tension de seuil de la cellule à cristaux liquides. En comparaison, dans une méthode multiplexée standard, le nombre de tensions à générer peut être au moins de 3, voire supérieur, avec une tension définissant un état logique 1 égale à 3.46·Vth pour un nombre de lignes égal à 9. Ceci donne préférence à l'utilisation de la technique d'adressage actif dans le cas où le nombre de lignes est réduit par rapport à une technique d'adressage par multiplexage traditionnel.

Il est à noter encore que les signaux de commande appliqués aux lignes et aux colonnes sont alternatifs pour obtenir une tension de polarisation alternative de chaque pixel pour l'affichage d'une information. Si uniquement une tension constante est appliquée entre une ligne et une colonne pour définir l'état d'un pixel, il peut survenir des réactions électrochimiques, qui ont tendance à raccourcir le temps de vie de la cellule d'affichage.

Avec une tension alternative, il est nécessaire de tenir compte d'une valeur moyenne de tension RMS (Root Mean Square en terminologie anglaise) suffisante dans chaque cycle, bien connu dans l'état de la technique. Cette valeur moyenne de tension RMS doit pouvoir définir un pixel à l'état OFF avec une tension de polarisation basse ou un pixel à l'état ON avec une tension de polarisation suffisante au-dessus de la tension de seuil Vth de la cellule d'affichage. Grâce à cette tension moyenne RMS, une erreur peut être tolérée étant donné qu'il est opéré une moyenne quadratique sur chaque cycle pour définir la tension de polarisation de chaque pixel.

La fréquence de la tension d'entraînement doit être au moins 30 Hz pour empêcher un papillotement de l'affichage. Une fréquence trop élevée établit par couplage des effets de relaxation, qui causent un contraste résiduel et irrégulier dans l'affichage. La limite de la fréquence plus élevée est approximativement de 200 Hz. La consommation en courant s'accroît normalement en proportion directe de la fréquence d'entraînement.

Pour comprendre l'adressage actif dans un mode partiel d'affichage du dispositif d'affichage, il doit être fait référence au moyen de générer chaque tension de colonne active pour définir les signaux de commande des colonnes. Tout d'abord, comme précédemment mentionné, il n'y a que deux niveaux de tension pour définir les états logiques 0 et 1. Il est utilisé une technique d'adressage numérique en mode partiel, qui est d'une approche totalement différente du multiplexage d'un dispositif d'affichage matriciel conventionnel basé sur l'adressage ligne à ligne.

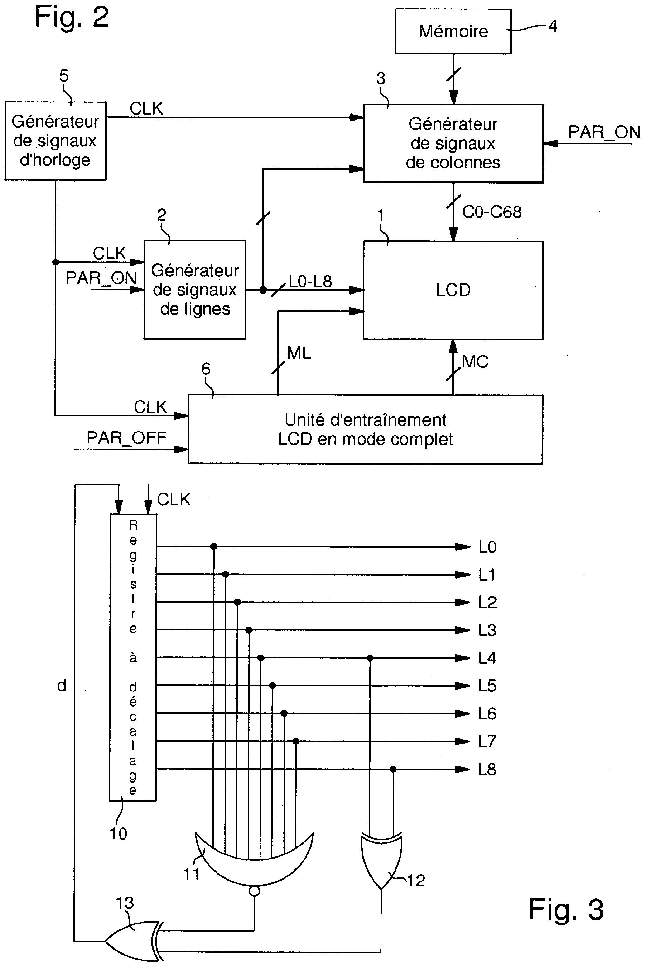

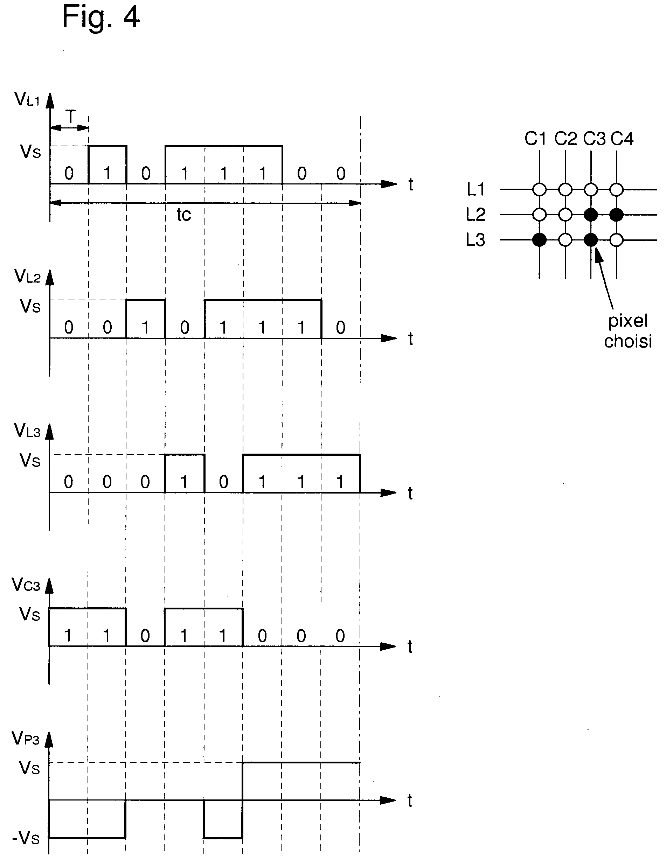

Par cette méthode d'adressage actif, tous les N lignes ou groupes de lignes L0 à L8 sont adressés simultanément. Ainsi comme expliqué ci-après plus simplement en référence aux figures 3 et 4, les signaux de commande des colonnes ou groupes de colonnes C0 à C68 sont déterminés sur la base des N signaux de commande de lignes et de chaque mot binaire de données à N bits de l'état des pixels de chaque colonne pour l'affichage d'une information.

Les N signaux de commande de lignes comprennent une succession de mots binaires de sélection de lignes à N bits, qui changent par période de temps T en fonction du cadencement opéré par un signal d'horloge CLK. Toutes les combinaisons de mots binaires de lignes dans chaque cycle successif doivent être sélectionnées selon un principe pseudo-aléatoire obtenu par un générateur de signaux de lignes. Pour un nombre N de lignes et groupes de lignes, il doit y avoir 2^{N} mots binaires différents dans chaque cycle de durée tc égale à 2^{N}·T.

Les données à afficher dans une colonne sont un mot de données de N bits, où chaque donnée vaut 0 pour un pixel OFF ou 1 pour un pixel ON. Les tensions de sélection de lignes sont choisies pour être 0 pour l'état logique 0 et Vs pour l'état logique 1. Dans chaque période de temps T, les mots binaires de données et de sélection de lignes sont comparés bit à bit en utilisant des comparateurs numériques par exemple des portes OU-EXCLUSIF (XOR). Le nombre de défauts d'alignement i entre ces deux mots binaires est déterminé en comptant le nombre de portes OU-EXCLUSIF avec une sortie égale à 1. La tension de chaque colonne Vc est décidée par une décision de majorité pour chaque période T afin d'obtenir chaque signal de commande de colonnes. La tension de colonne est 0 si le nombre i est moins que N/2 et est Vs si le nombre i est plus grand que N/2. Pour éviter que le nombre i soit égal à N/2, le nombre de lignes doit être choisi impair.

La durée temporelle T de chaque changement de mot binaire de lignes devrait être petite comparée au temps de réponse de la cellule d'affichage pour assurer un bon comportement RMS de l'affichage. La durée temporelle d'un cycle, qui est égale à 2^{N}·T, devrait être également basse pour éviter des papillotements dans l'affichage.

La valeur moyenne de tension RMS à travers les pixels est indépendante de la séquence dans laquelle les 2^{N} mots binaires de sélection de lignes sont choisis pour l'adressage de l'affichage. Ceci permet toute liberté dans le choix de la séquence à adapter aux caractéristiques de l'affichage.

Le dispositif d'affichage selon la présente invention comprend les différents éléments électroniques représentés schématiquement à la figure 2. Le dispositif d'affichage comprend tout d'abord une cellule d'affichage 1, qui peut être à cristaux liquides (LCD) avec une matrice passive d'électrodes, et un circuit de commande des lignes et colonnes de la matrice de la cellule d'affichage. Ledit circuit de commande peut être configuré pour que le dispositif d'affichage soit en mode complet d'affichage ou en mode partiel d'affichage.

Le circuit de commande comprend un générateur de signaux de lignes 2 en mode partiel d'affichage, un générateur de signaux de colonnes 3 en mode partiel d'affichage, une mémoire 4 de données à afficher, et une unité d'entraînement 6 de la cellule d'affichage dans un mode complet d'affichage. Le circuit de commande comprend également un générateur de signaux d'horloge 5 pour fournir des signaux de cadencement CLK au générateur de signaux de lignes 2, au générateur de signaux de colonnes 3 et à l'unité d'entraînement 6. Les signaux de cadencement CLK sont définis de telle manière que la fréquence de rafraîchissement de la cellule d'affichage à chaque cycle tc d'affichage soit proche de 75 Hz voire inférieure. Si le nombre de lignes pour l'adressage actif est réduit, cela permet de réduire cette fréquence de rafraîchissement.

Dans un mode complet d'affichage traditionnel, un signal de sélection PAR_OFF est fourni à l'unité d'entraînement 6 pour l'enclencher, alors qu'un signal inverse de sélection PAR_ON est fourni aux générateurs de signaux de lignes et colonnes 2 et 3 pour les rendre inactifs. Dans ce mode complet, l'unité d'entraînement doit adresser les lignes par multiplexage par des signaux de commande de lignes ML et les colonnes par des signaux de commande de colonnes MC de manière traditionnelle. Les signaux de commande sont définis à plusieurs niveaux de tension, par exemple 5 niveaux de tension doivent être prévus.

Dans un mode partiel d'affichage, une technique d'adressage actif est opérée. Pour ce faire, un signal de sélection PAR_ON est fourni aux générateurs de signaux de lignes et colonnes 2 et 3 pour les rendre actifs, alors qu'un signal inverse de sélection PAR_OFF rend inactif l'unité d'entraînement 6. Le générateur de signaux de commande de lignes 2 est à la base de l'adressage actif en mode partiel d'affichage. Il génère pour la cellule d'affichage 1 simultanément N signaux de commande de lignes L0 à L8, qui comprennent successivement différents mots binaires à N bits différents d'une période à l'autre comme expliqué précédemment. Ces signaux de commande de lignes sont également fournis au générateur de signaux de commande de colonnes 3 pour la détermination des signaux de commande de colonnes. La mémoire 4 par exemple non volatile fournit des mots binaires de données pour chaque colonne. Ces mots binaires de données sont comparés successivement aux mots binaires de lignes pour déterminer des signaux de commande de colonnes C0 à C68 fournis à la cellule d'affichage 1 pour l'affichage d'une information dans la zone active.

Un générateur de nombres pseudo-aléatoires en tant que générateur de signaux de lignes peut être utilisé pour l'adressage actif des lignes. Par exemple pour un nombre N de lignes et de groupes de lignes égal à 9, une implémentation possible est celle représentée sur la figure 3.

Sur cette figure 3, le générateur comprend un registre à décalage 10 pour mémoriser un mot binaire à N bits, par exemple 9 bits dans cette forme d'exécution. Un décalage de bits est opéré en fonction d'un signal d'horloge CLK, qui cadence ce registre. Une donnée d à 1 bit est introduite dans le registre à chaque coup d'horloge CLK. Cette donnée d peut être un état logique 0 pour une tension nulle ou un état logique 1 pour une tension Vs supérieure à la tension de seuil de la cellule d'affichage, par exemple pour une tension Vs égale à 1.659·Vth. Le temps entre deux flancs montants du signal d'horloge CLK peut être la durée T de chaque mot binaire dans l'adressage actif des lignes en mode partiel d'affichage.

Le générateur comprend également une porte logique du type NON-OU 11 pour opérer une addition inversée en sortie des 8 premiers bits du mot binaire du registre à décalage. Il comprend encore une première porte OU-EXCLUSIF 12 pour opérer une addition des 5^{e} et 9^{e} bits du registre à décalage et fournir un résultat égal à 0 lorsque les 5^{e} et 9^{e} bits sont identiques ou égal à 1 lorsque les 5^{e} et 9^{e} bits sont différents. Finalement, le générateur comprend une seconde porte OU-EXCLUSI F 13 pour additionner l'état de sortie de la porte NON-OU 11 et l'état de sortie de la première porte OU-EXCLUSIF 12, afin de fournir une donné d. Cette donnée d vaut 0 lorsque les bits d'entrée sont égaux ou 1 lorsque les bits d'entrée sont différents. Ainsi, le générateur est susceptible de fournir des signaux de commande de lignes L0 à L8, qui sont constitués d'une succession de mots binaires pour couvrir toutes les combinaisons de mots binaires possibles sur un cycle complet de l'adressage actif. Tous les signaux de commande de lignes sont des fonctions orthonormées.

Pour comprendre de manière plus simple comment s'opère la détermination du signal de commande d'une colonne et la tension de polarisation d'un pixel choisi au moyen de l'adressage actif des lignes, on se réfère maintenant aux graphiques de la figure 4. Par simplification, il n'est considéré que trois lignes L1 à L3 à adresser activement, et quatre colonnes C1 à C4 de la cellule d'affichage. Il est représenté sur cette figure 4, l'état souhaité des pixels pour l'affichage d'une information. Les pixels blancs définissent des pixels OFF, alors que les pixels noirs définissent des pixels ON.

Le pixel choisi est celui qui se trouve sur la colonne C3 et sur la ligne L3. Le graphique de la tension de polarisation V_{P3} de ce pixel choisi est montré comme dernier graphique de la figure 4 comme résultat des tensions V_{C3} du signal de commande de colonne C3 soustraites des tensions V_{L3} du signal de commande de ligne L3.

Sur un cycle d'adressage de ligne tc, les trois lignes V_{L1}, V_{L2}, V_{L3} définissent 8 mots binaires successifs tous différents et représentant toutes les combinaisons de mots binaires de 000 à 111. La durée de chaque mot binaire est égale à T, qui est 2^{N} fois inférieure à la durée de chaque cycle tc. Pour N égal à 3, il y a donc 8 combinaisons possibles de mots binaires de lignes.

Le signal de commande V_{C3} de la colonne C3 est donc obtenu sur la base de la comparaison du mot binaire de la colonne C3 et de chaque mot binaire de lignes. Comme montré de manière simplifiée, la colonne C3 comprend un premier pixel OFF et deux suivants pixels ON, ce qui donne un mot binaire de donnée 110. En faisant la comparaison bit à bit au moyen de portes OU-EXCLUSIF entre le mot binaire de données de la colonne C3 et chaque mot binaire de lignes, on obtient le signal de commande V_{C3}. Pour ce faire, il doit être tenu compte que la tension Vs dans le signal de commande V_{C3} représentant un état 1 est obtenu uniquement si le nombre de 1 en sortie des trois portes logiques OU-EXCLUSIF est plus grand que le nombre de 0. A l'inverse, la tension nulle dans le signal de commande V_{C3} représentant un état 0 est obtenu uniquement si le nombre de 0 en sortie des trois portes logiques OU-EXCLUSIF est plus grand que le nombre de 1.

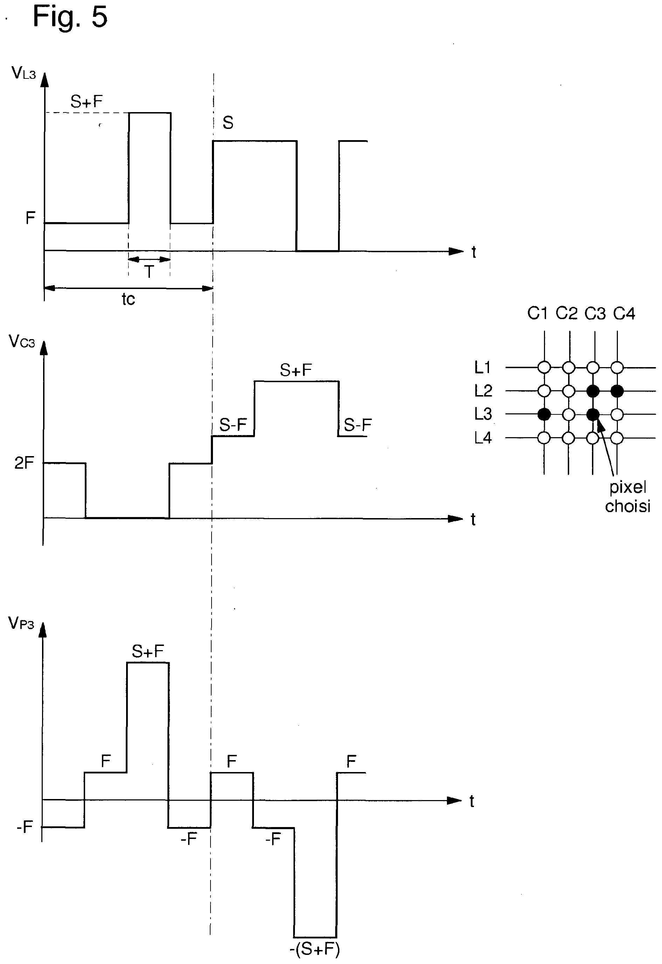

A la figure 5, il est juste représenté des graphiques des signaux de commande d'une ligne V_{L3} et d'une colonne V_{C3} d'un pixel choisi, et de la tension de polarisation résultante V_{P3} quand le dispositif d'affichage se trouve dans un mode complet d'affichage. De manière simplifiée, la cellule d'affichage n'est représentée que par 4 lignes L1 à L4 et 4 colonnes C1 à C4, où les pixels ON sont des pixels noirs, et les pixels OFF sont des pixels blancs. Le pixel choisi se trouve sur la ligne L3 et la colonne C3, et doit être un pixel ON.

Dans le mode complet d'affichage, il est opéré un adressage par multiplexage des lignes afin de les sélectionner une à une par période T chacune. Lors de l'adressage par multiplexage traditionnel, la succession de cycles de durée tc d'adressage de lignes doit être alternée normalement un cycle sur deux par des cycles d'impulsions identiques mais de polarité inverse pour supprimer la composante continue de tension. Cependant comme il est souhaité ne travailler qu'avec des tensions au-dessus de 0 pour les signaux de commande des lignes V_{L3} et des colonnes V_{C3}, il doit être ajouté une tension constante F dans un premier cycle, et une tension S dans un second cycle suivant le premier cycle. Les cycles se répètent en alternance.

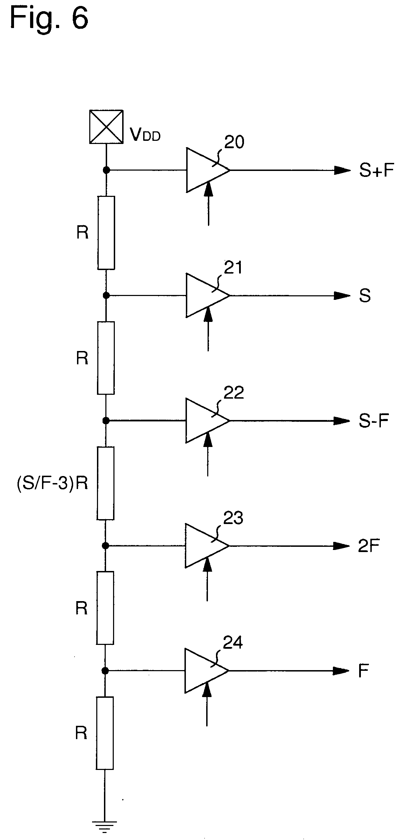

Les différentes tensions utilisées pour la génération des signaux de commande sont représentées de manière simplifiée par un élément diviseur résistif représenté à la figure 6. Plusieurs résistances sont reliées en série entre une borne de tension positive V_{DD} à la sortie d'un circuit élévateur de tension non représenté, et une borne de masse. La tension positive V_{DD} peut être de valeur supérieure à 5 fois la tension de seuil Vth de la cellule d'affichage si elle comprend par exemple 31 lignes.

Sur cinq résistances prévues dans ce diviseur résistif, quatre des résistances R peuvent être de même valeur, alors qu'une résistance intermédiaire peut être de valeur inférieure ou supérieure. Des amplificateurs suiveurs 20 à 24 ou des interrupteurs peuvent être prévus placés à chaque noeud de connexion de deux résistances, ainsi qu'à la borne positive V_{DD}. Ces amplificateurs peuvent être individuellement commandés pour être actif ou inactif afin de fournir un des cinq niveaux de tension au-dessus de 0 pour la génération des différents signaux de commande.

Un premier niveau de tension F peut être fourni en sortie de l'amplificateur 24. Un second niveau de tension 2·F peut être fourni en sortie de l'amplificateur 23. Un troisième niveau de tension S-F peut être fourni en sortie de l'amplificateur 22. Un quatrième niveau de tension S peut être fourni en sortie de l'amplificateur 21. Finalement, l'amplificateur 20 fournit la tension positive V_{DD}, qui correspond à la tension S+F. De préférence pour déterminer les tensions S et F, il doit être tenu compte du rapport optimum fournissant le contraste maximum entre un pixel ON et un pixel OFF. Ce rapport optimum devient un maximum pour S/F = N^{0.5} où N est le nombre de lignes.

Comme montré à la figure 5, le pixel choisi est le pixel sur la ligne L3 et la colonne C3. Etant donné qu'il n'est représenté que 4 lignes par simplification, il est opéré 4 multiplexage de lignes par cycle tc. La durée de chaque ligne sélectionnée vaut T. Le signal de commande de ligne V_{L3} et le signal de commande de colonne V_{C3} sont représentés avec les différents niveaux de tension requis. Finalement, la tension de polarisation V_{P3} du pixel choisi est le signal de commande de colonne V_{C3} soustrait du signal de commande de ligne V_{L3}. On remarque que le signal de polarisation est de polarité inverse autour de 0 V un cycle sur deux. La tension moyenne V_{RMS} sur chaque cycle est donc suffisante pour que le pixel choisi soit un pixel ON.

Comme indiqué auparavant, le dispositif d'affichage peut ainsi être configuré soit en mode complet d'affichage, soit en mode partiel d'affichage basse consommation. Le mode partiel d'affichage est principalement utilisé étant donné qu'il permet l'affichage d'au moins une ligne de caractères sur une zone active restreinte de la cellule d'affichage. Dans ce mode partiel, la consommation du dispositif d'affichage est fortement réduite par rapport au mode complet d'affichage grâce à la technique d'adressage actif des lignes.

A partir de la description qui vient d'être faite, plusieurs variantes du dispositif d'affichage peuvent être conçues par l'homme du métier sans sortir du cadre de l'invention définie par les revendications. Il peut être envisagé d'utiliser une telle technique d'adressage actif pour tout type de dispositif d'affichage, qu'il soit à matrice passive ou à matrice active. Les substrats de la cellule d'affichage peuvent être rigides ou flexibles. Il peut être envisagé une zone active du dispositif d'affichage configuré en d'autres endroits que sur la partie centrale de la cellule d'affichage avec un déplacement de cette zone active programmable.

## Revendications

1. Dispositif d'affichage comprenant une cellule d'affichage (1), qui comprend un substrat inférieur, un substrat supérieur transparent, un cadre de scellement des substrats définissant une cavité fermée dans laquelle se trouve une substance dont les propriétés optiques changent en présence d'un champ électrique, et une matrice d'électrodes disposées en lignes (L0 à L8) et en colonnes (C0 à C68) à l'intérieur de la cavité pour définir des pixels de la cellule d'affichage, le dispositif comprenant également un circuit de commande des lignes et des colonnes (2, 3, 4, 5, 6) pour l'affichage d'une information sur la cellule d'affichage, dans un mode complet d'affichage toutes les lignes et les colonnes étant adressées à plusieurs niveaux de tension par multiplexage ligne par ligne successivement,
**caractérisé en ce que** dans un mode partiel d'affichage basse consommation, au moins un groupe de lignes (L0, L8) est relié pour être commandé par un même signal de commande de ligne du circuit de commande de la matrice,
**en ce que** les lignes (L1 à L7) d'une zone active de la cellule d'affichage et le groupe de lignes sont adressés simultanément par une technique d'adressage actif à deux niveaux de tension, un premier niveau de tension définissant un niveau logique 0 et un second niveau de tension définissant un niveau logique 1, ce second niveau de tension étant plus grand que la tension de seuil du dispositif d'affichage, mais moins de deux fois supérieur à ladite tension de seuil, et
**en ce que** les signaux de commande des colonnes de la zone active sont déterminés chacun sur la base des N signaux de commande des N lignes, qui comprennent une succession de mots binaires de sélection de lignes à N bits, qui sont comparés bit à bit dans un cycle complet à un mot binaire de données à N bits représentatif de l'état des pixels de chaque colonne.

2. Dispositif d'affichage selon la revendication 1, **caractérisé en ce que** dans un mode partiel d'affichage, au moins un groupe de colonnes (C0, C68) est relié pour être commandé par un même signal de commande de colonne du circuit de commande, et **en ce que** les signaux de commande des colonnes de la zone active et du groupe de colonnes sont déterminés chacun sur la base des N signaux de commande des N lignes comparés bit à bit dans un cycle complet à un mot binaire de données à N bits représentatif de l'état des pixels de chaque colonne.

3. Dispositif d'affichage selon la revendication 1, **caractérisé en ce que** les lignes sont placées sur une première face intérieure d'un des substrats, **en ce que** les colonnes sont placées sur une seconde face intérieure de l'autre substrat et disposées perpendiculairement aux lignes afin de définir des pixels de la cellule d'affichage à matrice passive, et **en ce que** la cellule d'affichage comprend N' lignes et M' colonnes, où le nombre de lignes N', qui peut être supérieur à 11, est inférieur au nombre de colonne M', qui peut être supérieur à 69, pour un affichage en mode complet du dispositif d'affichage.

4. Dispositif d'affichage selon la revendication 2, **caractérisé en ce que** le nombre de lignes et groupe de lignes adressées activement dans le mode partiel d'affichage est un nombre entier N compris entre 3 et 11.

5. Dispositif d'affichage selon la revendication 4, **caractérisé en ce que** le nombre N est un nombre impair.

6. Dispositif d'affichage selon l'une des revendications précédentes, **caractérisé en ce que** dans un mode partiel d'affichage, un nombre N de lignes et groupes de lignes est commandé simultanément par N signaux de commande de lignes, qui comprennent une succession de mots binaires de sélection de lignes à N bits, qui changent par période de temps T déterminée, afin que toutes les combinaisons de mots binaires de lignes, c'est-à-dire 2^{N} mots binaires différents soient présents dans chaque cycle successif de durée 2^{N}·T.

7. Dispositif d'affichage selon l'une des revendications 1 et 6,
**caractérisé en ce que** deux groupes de lignes adjacentes (L0, L8) sont formés dans un mode partiel d'affichage avec les lignes (L1 à L7) d'une zone active disposées entre les deux groupes de lignes reliés.

8. Dispositif d'affichage selon l'une des revendications précédentes, **caractérisé en ce que** deux groupes de colonnes adjacentes (C0, C68) sont formés dans un mode partiel d'affichage avec les colonnes (C1 à C67) d'une zone active disposées entre les deux groupes de colonnes reliés.

9. Dispositif d'affichage selon l'une des revendications 1 et 6,
**caractérisé en ce que** dans un mode partiel d'affichage basse consommation, N signaux de commande de lignes sont générés simultanément par un générateur de signaux de commande de lignes (2) cadencé par un signal d'horloge (CLK) fourni par un générateur de signaux d'horloge (5).

10. Dispositif d'affichage selon la revendication 9, **caractérisé en ce que** le générateur de signaux de commande de lignes comprend un registre à décalage (10) pour mémoriser un mot binaire à N bits et fournir N signaux de commande de lignes, une porte logique du type NON-OU (11) pour additionner les N-1 premiers bits et fournir un signal inversé, une première porte logique OU-EXCLUSIF (12) pour additionner deux des N bits différents, et une seconde porte logique OU-EXCLUSIF (13) pour additionner la sortie de la porte NON-OU et la sortie de la première porte OU-EXCLUSIF afin de fournir une donnée au registre à décalage à insérer à chaque signal d'horloge.

## Patentansprüche

1. Anzeigevorrichtung, die eine Anzeigezelle (1) enthält, die ein unteres Substrat, ein lichtdurchlässiges oberes Substrat, einen Rahmen für die Einkapselung der Substrate, der einen geschlossenen Hohlraum definiert, in dem sich eine Substanz befindet, deren optische Eigenschaften sich in Gegenwart eines elektrischen Feldes ändern, und eine Matrix von Elektroden, die in dem Hohlraum in Zeilen (L0 bis L8) und Spalten (C0 bis C68) angeordnet sind, um Pixel der Anzeigezelle zu definieren, umfasst, wobei die Vorrichtung außerdem eine Schaltung zum Ansteuern der Zeilen und Spalten (2, 3, 4, 5, 6) für die Anzeige einer Information auf der Anzeigezelle umfasst, wobei in einer Vollanzeigebetriebsart sämtliche Zeilen und Spalten durch zeilenweises Multiplexieren nacheinander mit mehreren Spannungspegeln adressiert werden,
**dadurch gekennzeichnet, dass** in einer Teilanzeigebetriebsart mit niedrigem Verbrauch wenigstens eine Gruppe von Zeilen (L0, L8) verbunden ist, um durch dasselbe Zeilenansteuersignal der Steuerschaltung der Matrix gesteuert zu werden,
dass die Zeilen (L1 bis L7) einer aktiven Zone der Anzeigezelle und die Gruppe von Zeilen gleichzeitig durch eine aktive Adressierungstechnik mit zwei Spannungspegeln adressiert werden, wobei ein erster Spannungspegel einen logischen Pegel 0 definiert und ein zweiter Spannungspegel einen logischen Pegel 1 definiert, wobei dieser zweite Spannungspegel höher ist als die Schwellenspannung der Anzeigevorrichtung, jedoch weniger als zweimal höher als die Schwellenspannung ist, und
dass die Ansteuersignale der Spalten der aktiven Zone jeweils anhand von N Ansteuersignalen von N Zeilen bestimmt werden, die eine Folge von binären Zeilenauswahlwörtern mit N Bit enthalten, die in einem vollständigen Zyklus bitweise mit einem binären Datenwort mit N Bit, das den Zustand der Pixel jeder Spalte repräsentiert, verglichen werden.

2. Anzeigevorrichtung nach Anspruch 1, **dadurch gekennzeichnet,**
**dass** in der Teilanzeigebetriebsart wenigstens eine Gruppe von Spalten (C0, C68) verbunden ist, um durch dasselbe Spaltenansteuersignal der Ansteuerschaltung gesteuert zu werden, und dass die Ansteuersignale der Spalten der aktiven Zone und der Gruppe von Spalten jeweils anhand von N Ansteuersignalen von N Zeilen bestimmt werden, die in einem vollständigen Zyklus bitweise mit einem binären Datenwort mit N Bit, das den Zustand der Pixel jeder Spalte repräsentiert, verglichen werden.

3. Anzeigevorrichtung nach Anspruch 1, **dadurch gekennzeichnet,**
**dass** die Zeilen auf einer ersten unteren Fläche eines der Substrate angeordnet sind, dass die Spalten auf einer zweiten unteren Fläche des anderen Substrats angeordnet und senkrecht zu den Zeilen orientiert sind, um Pixel der Anzeigezelle mit passiver Matrix zu definieren, und dass die Anzeigezelle für eine Vollanzeigebetriebsart der Anzeigevorrichtung N' Zeilen und M' Spalten enthält, wobei die Zeilenanzahl N', die größer als 11 sein kann, kleiner ist als die Spaltenanzahl M', die größer als 69 sein kann.

4. Anzeigevorrichtung nach Anspruch 2, **dadurch gekennzeichnet,**
**dass** die Anzahl der Zeilen und der Gruppe von Zeilen, die in der Teilanzeigebetriebsart aktiv adressiert werden, eine ganze Zahl im Bereich von 3 bis 11 ist.

5. Anzeigevorrichtung nach Anspruch 4, **dadurch gekennzeichnet,**
**dass** die Zahl N eine ungerade Zahl ist.

6. Anzeigevorrichtung nach einem der vorhergehenden Ansprüche, **dadurch gekennzeichnet, dass** in einer Teilanzeigebetriebsart eine Anzahl N von Zeilen und von Gruppen von Zeilen gleichzeitig durch N Zeilenansteuersignale angesteuert werden, die eine Folge von binären Zeilenauswahlwörtern mit N Bit enthalten, die sich pro bestimmter Zeitperiode T ändern, damit sämtliche Kombinationen von binären Zeilenwörtern, d. h. 2^{N} verschiedene binäre Wörter, in jedem aufeinander folgenden Zyklus mit Dauer 2^{N} T vorhanden sind.

7. Anzeigevorrichtung nach einem der Ansprüche 1 und 6,
**dadurch gekennzeichnet, dass** in einer Teilanzeigebetriebsart zwei Gruppen benachbarter Zeilen (L0, L8) mit den Zeilen (L1 bis L7) einer aktiven Zone, die zwischen den zwei Gruppen verbundener Zeilen angeordnet sind, gebildet sind.

8. Anzeigevorrichtung nach einem der vorhergehenden Ansprüche, **dadurch gekennzeichnet, dass** in einer Teilanzeigebetriebsart zwei Gruppen benachbarter Spalten (C0, C68) mit den Spalten (C1 bis C67) einer aktiven Zone, die zwischen den zwei Gruppen verbundener Spalten angeordnet sind, gebildet sind.

9. Anzeigevorrichtung nach einem der Ansprüche 1 und 6,
**dadurch gekennzeichnet, dass** in einer Teilanzeigebetriebsart mit niedrigem Verbrauch N Zeilenansteuersignale gleichzeitig durch einen Zeilenansteuersignal-Generator (2), der durch ein von einem Taktsignalgenerator (5) geliefertes Taktsignal (CLK) getaktet wird, erzeugt werden.

10. Anzeigevorrichtung nach Anspruch 9, **dadurch gekennzeichnet,**
**dass** der Zeilensteuersignal-Generator ein Schieberegister (10), um ein binäres Wort mit N Bit zu speichern und um N Zeilenansteuersignale zu liefern, ein Nicht-ODER-Logikgatter (11), um die N-1 ersten Bits zu addieren und um ein invertiertes Signal zu liefern, ein erstes Exklusiv-ODER-Logikgatter (12), um zwei verschiedene der N Bits zu addieren, und ein zweites Exklusiv-ODER-Logikgatter (13), um den Ausgang des Nicht-ODER-Gatters und den Ausgang des ersten Exklusiv-ODER-Gatters zu addieren, umfasst, um an das Schieberegister eine Dateneinheit zu liefern, die in jedes Taktsignal einzufügen ist.

## Claims

1. Display device including a display cell (1), which includes a bottom substrate, a transparent top substrate, a frame sealing of the substrates defining a closed cavity in which there is a substance, whose optical properties change in the presence of an electric field, and a matrix of electrodes arranged in lines (L0 to L8) and columns (C0 to C68) inside the cavity to define the display cell pixels, the device also including a control circuit for the lines and columns (2, 3, 4, 5, 6) for displaying data on the display cell, in complete display mode all of the lines and columns being addressed at several voltage levels by successive line-by-line multiplexing,
**characterized in that** in low power partial display mode, at least one group of lines (L0, L8) is connected so as to be controlled by a same line control signal from the matrix control circuit,
**in that** the lines (L1 to L7) of an active zone of the display cell and the group of lines are addressed simultaneously by an active addressing technique at two voltage levels, a first voltage level defining logic level 0 and a second voltage level defining logic level 1, said second voltage level being higher than the threshold voltage of the display device, but less than two times higher than said threshold voltage, and
**in that** the column control signals of the active zone are each determined on the basis of the N line control signals, which include a series of N-bit binary line selection words, which are compared bit-by-bit in one complete cycle to an N-bit binary data word representative of the state of the pixels of each column.

2. Display device according to claim 1, **characterized in that**, in partial display mode, at least one group of columns (C0, C68) is connected so as to be controlled by a same column control signal from the control circuit, and **in that** the column control signals of the active zone and of the group of columns are each determined on the basis of the N line control signals, compared bit-by-bit, in one complete cycle, to an N-bit binary data word representative of the state of the pixels of each column.

3. Display device according to claim 1, **characterized in that** the lines are placed on a first inner face of one of the substrates, **in that** the columns are placed on a second inner face of the other substrate and arranged perpendicularly to the lines so as to define pixels of the passive matrix display cell, and **in that** the display cell includes N' lines and M' columns, where the number of lines N', which may be higher than 11, is less than the number of columns M', which may be higher than 69, for the complete display mode of the display device.

4. Display device according to claim 2, **characterized in that** the number of lines and group of lines actively addressed in partial display mode is an integer number N comprised between 3 and 11.

5. Display device according to claim 4, **characterized in that** that the number N is an odd number.

6. Display device according to any one of the preceding claims,
**characterized in that** in partial display mode, a number N of lines and groups of lines is simultaneously controlled by N line control signals, which include a series of N-bit binary line selection words, which change every determined period of time T, so that all of the binary line word combinations, i.e. 2^{N} different binary words, are present in each successive cycle of length 2^{N}·T.

7. Display device according to any one of claims 1 and 6,
**characterized in that** two groups of adjacent lines (L0, L8) are formed in partial display mode with the lines (L1 to L7) of an active zone arranged between the two groups of connected lines.

8. Display device according to any one of the preceding claims,
**characterized in that** two groups of adjacent columns (C0, C68) are formed in a partial display mode with the columns (C1 to C67) of an active zone arranged between the two connected groups of columns.

9. Display device according to any one of claims 1 and 6,
**characterized in that** in low power partial display mode, N line control signals are generated simultaneously by a line control signal generator (2), clocked by a clock signal (CLK), supplied by a clock signal generator (5).

10. Display device according to claim 9, **characterized in that** the line control signal generator includes a shift register (10) for storing an N-bit binary word and supplying N line control signals, a NOR logic gate (11) for adding the first N-1 bits and supplying an inverse signal, a first EXCLUSIVE-OR logic gate (12) for adding two of the N different bits, and a second EXCLUSIVE-OR logic gate (13) for adding together the output of the NOR gate and the output of the first EXCLUSIVE-OR gate so as to supply data to the shift register to be inserted at each clock signal.
